# EUROPEAN PATENT APPLICATION

(11) **EP 2 009 588 A1**
(43) Date of publication of application: **31.12.2008**
(21) Application number: 08305268.8
(22) Date of filing: 16.06.2008
(51) Int. Cl.: G06Q 30/00

(54) **Method for distributing display information to a remote display device, a corresponding display device, a system for distributing display information and a signal comprising display information**

(30) Priority: 29.06.2007 EP 07301178
(71) Applicant: Thomson Licensing, 92100 Boulogne-Billancourt (FR)
(72) Inventor: Weitbruch, Sébastien, 78078, Kappel (DE); Zwing, Rainer, 78052 Villingen-Schwenningen (DE); Thebault, Cedric, 78050 Villingen-Schwenningen (DE)
(74) Representative: Kurth, Dieter

(57) **Abstract**

A subject of the invention is to ensure that a remote display device is only useable for a specific application like advertising or public information.

According to the invention, this object is solved by a method for distributing display information to a remote display device, comprising the steps of:
- providing (100) the remote display device with a signal comprising an activation key and the display information,
- providing (200) the control unit of the remote display device with a locking function using a control key, and
- comparing (300) the activation key to the control key and authorizing (400) the displaying of the display information by deactivating the locking function if the activation key is fitting with the control key.

## Description

### Field of the invention

The invention relates to a method for distributing display information to a remote display device, a display device, a system for distributing display information to remote display devices and a signal comprising information to be provided to such a remote display device.

### Background of the invention

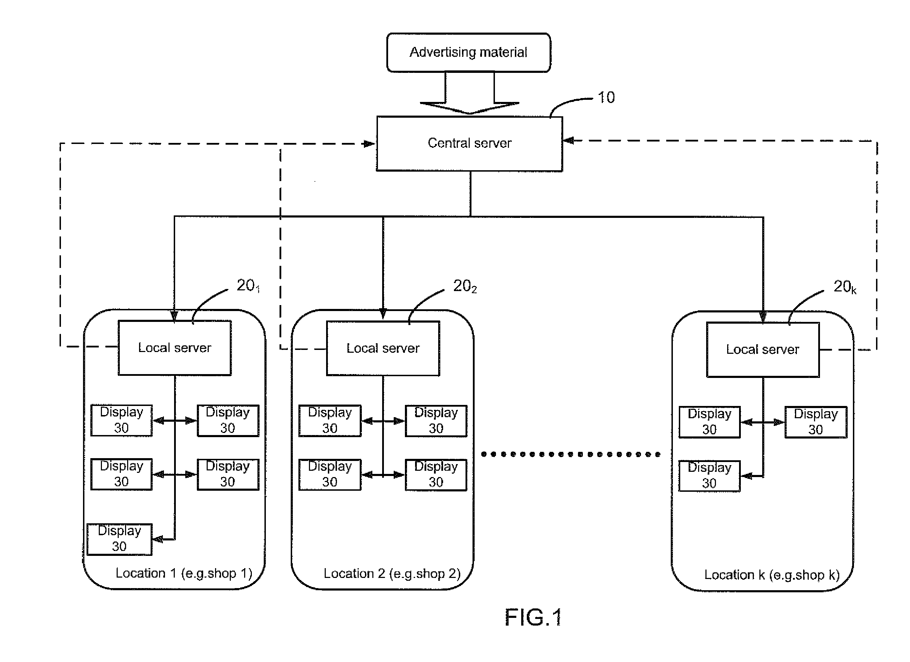

In a retail environment or in a more public environment like airports or train stations, flat displays are commonly used to convey information for people present in these places. This information can be advertisements, entertainment or global information like opening hours, crisis information like during a hurricane and so on. This information can be distributed and driven from a central server located far away from the display devices and eventually a plurality of local servers. **Figure 1** shows advertising distribution system for a retail advertising network. The advertising material is generated somewhere and is transmitted via a central server directly to the shops. It has to be noted that the shops can belong to different network while sharing the same advertising network. A central server 10 distributes advertising information to a plurality (k) of local servers 20ᵢ placed at different locations (e.g. different shops), i ∈[1...k]. The advertising information are distributed to the local servers 20i via a network, e.g. via satellite. The local servers re-distribute the information to display devices 30 in the shops. A feedback stream is eventually provided between the local servers and the central server. This feedback link is represented in dotted lines since it is optional.

Usually, the advertising network including flat panel displays is setup inside the shop by an independent company. This company is also responsible for the good displaying of the right information. Indeed, usually part of the material and network running costs are covered by the advertising fees coming from the brands. On the other side, the owners of these brands want to be sure that their advertising spots are really shown at the right time and at the right place. For instance, the display devices placed in the shops can be provided or financed partly by the advertising. So there is a clear need to be sure that the display device only runs for that purpose and is not used for something else.

At the same time, such display devices are also installed in a public environment that is not always well controlled or protected against robbery.

Regarding the control of the right use of the display device, today's solutions are often based on a visual check of the display device or using camera and checking specific watermarks or specific signals inside the signal. Those solutions are able to inform the central server about a non authorized use of the display device but do not actively forbid it. The same is true for similar applications like public displays (airport, train stations...).

Regarding the robbery issue, public or advertising display devices are usually inserted in specific cabinet including the electronics required by the application. The selected cabinet is usually heavy that makes it more secure against robbery than traditional cabinets but this has additional cost and makes also the installation and move of such displays more complex.

### Summary of the invention

The invention is aimed at alleviating these drawbacks of the prior art. More particularly, one objective of the invention is to ensure that the display is only useable for a specific application like advertising or public information. Another objective is to limit the risk of robbery by making it unusable for a different application.

According to the invention, this object is solved by a method for distributing display information to a remote display device, comprising the steps of:
- providing the remote display device with a signal comprising an activation key and the display information,
- providing the control unit of the remote display device with a locking function using a control key, and
- comparing the activation key to the control key and authorizing the displaying of the display information by deactivating the locking function if the activation key is fitting with the control key.

In a preferred embodiment, the activation key and the display information are scrambled in the signal provided to the remote display device and descrambled before comparing the activation key to the control key.

Preferably, the activation key and the control key depend on the subject of the display information to be displayed and the control key and the activation key are generated by the company responsible for distributing said display information.

The invention concerns also a display device for displaying information comprising:
- an input for receiving a signal comprising an activation key and the information to be displayed,
- display means for displaying said information,
- a control unit for controlling the display means, and
- a locking circuit coupled to the control unit for comparing the activation key to a control key and authorizing the displaying of the information if the activation key is fitting with the control key.

The locking circuit is for example included in the control unit and the control key is stored in the locking circuit.

In a specific embodiment, the signal provided to the display device is scrambled and the display device comprises means for descrambling this signal.

The invention concerns also a system for distributing display information to at least one remote display device comprising a central server for transmitting the display information to the remote display device via a network wherein the central server further transmits an activation key together with the display information and wherein the remote display device is a display device as precited.

The system comprises a plurality of remote display devices and local servers connected between the network and the remote display devices and each local server is connected to remote display devices located in a same area.

Finally, the invention concerns a signal comprising display information to be displayed by a remote display device wherein it further comprises an activation key used by the remote display device for authorizing the displaying of the display information by the remote display device.

### Brief description of the drawings

Exemplary embodiments of the invention are illustrated in the drawings and are explained in more detail in the following description. In the drawings :
Fig.1 is the block diagram of a retail advertising system comprising a local server, a plurality of local servers and a plurality of remote display devices,
Fig.2 shows the steps of the method according to the invention, and
Fig.3 is the diagram of a remote display device according to the invention.

### DESCRIPTION OF PREFERRED EMBODIMENTS

The invention is described hereinafter in the framework of a system for distributing advertising in shops but it is applicable to any type of system responsible for distributing public or private information in remote display devices. It is applicable to any kind of information that has to be distributed in remote display devices.

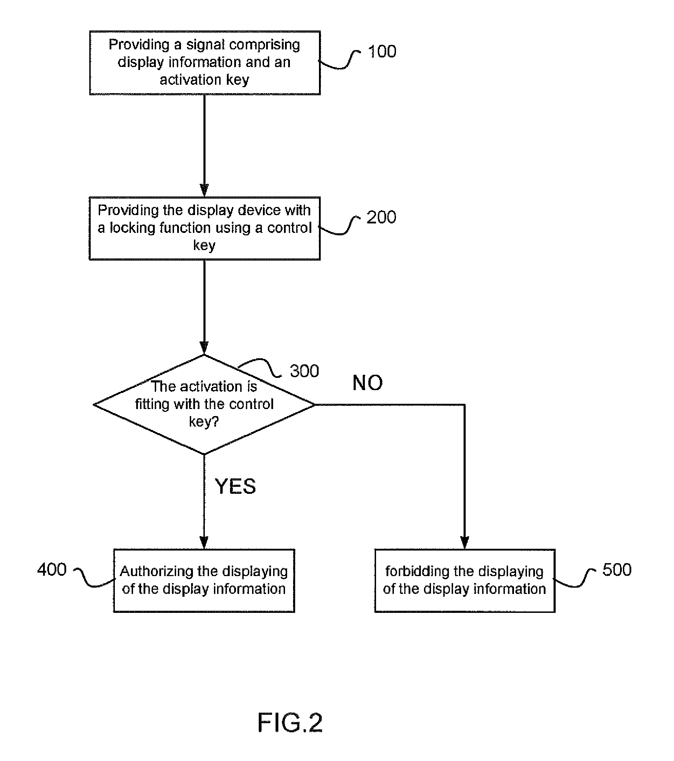

**Figure 2** shows the steps of a method for distributing display information on a remote display device in accordance with the invention. According to the invention, an activation key is provided with the display information to be displayed (step 100) to the remote display device and the control unit of the display device is provided with a locking function using a control key (step 200). The display information is advertising information in the present case. The activation key is then compared to the control key (step 300) and the displaying of the display information is authorized (step 400) by deactivating the locking function if the activation key is fitting with the control key. If this should not be the case, the displaying is forbidden (step 500).

The activation key and the display information are preferably scrambled in the signal provided to the remote display device and descrambled before comparing the activation key to the control key.

The activation key and the control key advantageously depend on the subject of the display information. For example, an activation key and a corresponding control key are generated for sport and these keys are used when the display information is about sport.

The control key and the activation key are generated by the company responsible for distributing said display information. The control key is programmed in the locking function by means of a programming key.

Advantageously, if the activation key does not fit with the control key, the number of trials with a wrong activation key is limited for example to 3 like for a bank card. In other words, if somebody is sending several consecutive activation keys that are wrong, the display device goes in a full lock mode where it does no more read any activation keys. The unlocking of the locking function can be then done by using a specific key called reactivation key. This is to avoid that somebody tests all the possible activation keys (by using software program) until he gets the right one.

Advantageously, if a display device is receiving a wrong activation key, it sends a signal back to the central server by using a feedback line so that the central server knows that something is wrong and could react accordingly. The signal should also be sent if the reactivation key has been used.

In a preferred embodiment, the locking function is unlocked by a right activation key only for a predetermined time period in such a way that the right activation key should be regularly sent to the display device. It is for preventing that somebody waits for the right activation key to be received by the display device and then uses the display device for displaying something else.

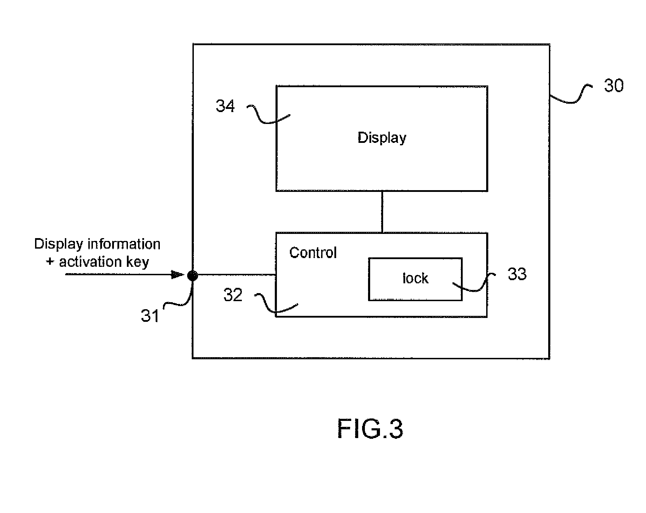

**Figure 3** is a block diagram of a display device 30 according to the invention. This display device 30 comprises an input 31 for receiving a signal comprising an activation key and the information to be displayed and a display control unit 32 responsible for the control of the whole display device. The input 31 is for example the HDMI input of the display device and is the only active input of the display device. This standard allows the transmission of specific control signals that could contain the activation key. A locking circuit 33 is provided with the control unit 32. This locking circuit is preferably included in the display control unit 32. It can also be added in front of the display electronics but it is then more easily removable and that makes it less efficient for robbery protection but still interesting for avoiding the display of non-authorized signal. The locking circuit is responsible for comparing the activation key to a control key and authorizing the displaying of the display information if the activation key is fitting with the control key. The display information is then displayed by display means 34 of the display device.

Advantageously, the signal provided to the input 31 is scrambled. Therefore, the display device comprises advantageously means for descrambling this signal.

This display device is an integral part of a system comprising a central server, a plurality of local servers and other remote display devices as shown in figure 1.

The locking circuit is implemented in the device by the set integrator or the manufacturer of the display device. This company is responsible for delivering programming keys to the final companies distributing display information via the display devices. Different programming keys are delivered to these final companies. Then the control key is programmed in the locking circuit by the final company by using the programming key delivered by the manufacturer. This final company is also responsible for inserting the corresponding activation key inside the signal distributed.

With this display device, the displaying of other type of information than the display information delivered by the central server is prevented

As mentioned previously, the control key preferably depends on the type of display information to be displayed. It prevents from displaying wrong information coming from the central server. For instance, it prevents from displaying food advertising in a sport department. Indeed, the display devices located in several departments inside one store can be programmed with different control keys, thus avoiding the displaying of not adapted signals. In this case, the central server sends for each type of advertisement spots, different activation keys inside the signal fitting with their content and, in the store, the display devices located in the different departments are programmed with corresponding control keys.

The invention is not restricted to the disclosed embodiments. In particular, the display information can be information other than advertising information, for example public information for public areas like airport or train stations or private information for a private company with different sites.

## Claims

1. Method for distributing display information to a remote display device, **characterized in that** it comprises the steps of:
- providing (100) the remote display device with a signal comprising display activation key information and the display information,
- providing (200) the control unit of the remote display device with a locking function, which may be deactivated by using a control key of the display activation key information, and
- comparing (300) the display activation key information with the control key and displaying the display information by deactivating the locking function if the display activation key is fitting with the control key.

2. Method according to claim 1, wherein the display activation key information and the display information are scrambled in the signal provided to the remote display device and descrambled before comparing the display activation key to the control key.

3. Method according to claim 1 or 2, wherein the display activation key and the control key being selected according to the subject of the display information.

4. Method according to any one of claim 1 to 3, wherein the display information is advertisement information, public information or is entertainment information.

5. Method according to any one of the claims 1 to 4, wherein the control key and the activation key are generated by the company responsible for distributing said display information.

6. Display device (30) for displaying information comprising:
- an input (31) for receiving a signal comprising display activation key information and the information to be displayed,
- display means (34) for displaying said information,
- a control unit (32) for controlling an activation of the display means,
**characterized in that** it further comprises a locking circuit (33) coupled to the control unit for comparing the activation key of the display activation key information with a control key and displaying the information if the activation key is fitting with the control key.

7. Display device according to claim 6, wherein the locking circuit (33) is included in the control unit (32).

8. Display device according to claim 6 or 7, wherein the control key is stored in the locking circuit (33).

9. Display device according to any of the preceding claims, wherein it further comprises means for descrambling the signal provided to the display device.

10. Display device according to any of the preceding claims, wherein the activation key and the control key depend on the subject of the information to be displayed.

11. Display device according to any one of the claims 6 to 10, wherein the control key is stored in the locking circuit (33) or in a memory of the control unit (32) by using a programming key.

12. Display device according to claim 11, wherein the programming key is delivered by the manufacturer of said display device.

13. System for distributing display information to at least one remote display device comprising a central server for transmitting the display information to said at least one remote display device via a network wherein the central server further transmits display activation key information together with said display information for activating a display device having means for controlling an activation of the display means by said display activation key information.

14. System according to claim 13, wherein it comprises a plurality of remote display devices and local servers connected between the network and said remote display devices, each local server being connected to remote display devices located in a same area.

15. Signal comprising display information to be displayed by a remote display device wherein it further comprises display activation key information used by the remote display device for displaying said display information by said remote display device.
